# EUROPEAN PATENT APPLICATION

(11) **EP 4 783 635 A1**
(43) Date of publication of application: **29.07.2026**
(21) Application number: 25153860.9
(22) Date of filing: 24.01.2025
(51) Int. Cl.: H04W 12/041, H04W 12/08, H04L 9/32, B60R 25/24, G07C 9/00, H04W 4/40

(54) **A SERVER AND A METHOD FOR MANAGING A DIGITAL KEY FOR A VEHICLE-RELATED SERVICE**

(71) Applicant: Bayerische Motoren Werke Aktiengesellschaft, 80809 München (DE)
(72) Inventor: Fink, Matthias, 81541 München (DE)

(57) **Abstract**

The present document describes a key management server (141) configured to manage a digital key (161) for providing a digital key-based service for a vehicle (100). The key management server (141) is configured to receive a key generation request for generating a digital key (161). Furthermore, the key management server (141) is configured to generate the digital key (161) and metadata for the digital key (161), to cause the metadata to be signed using an issuer key, thereby providing an issuer signature, and to cause a key tracking receipt to be signed using a tracking key, thereby providing a tracking signature. Furthermore, the key tracking server (141) is configured to provide a key attestation (162) of the digital key (161) to the vehicle (100), wherein the key attestation (162) is indicative of the digital key (161), of the metadata, of the issuer signature and of the tracking signature.

## Description

The present document is directed at enabling a digital key-based service for a vehicle. In particular, the present document relates to generating a digital key for enabling a digital key-based service.

A vehicle may comprise a communication unit which allows a user to control one or more functions of the vehicle using a portable device, such as a smartphone or a smart watch. Example functions which may be controlled using the portable device are unlocking and/or locking of a door of the vehicle and/or starting the engine of the vehicle. The portable device typically comprises a digital key for authentication of the portal device at the vehicle. Such a portable device may be referred to as a digital key device. The digital key may be a CCC (Car Connectivity Consortium) digital key.

The vehicle may be owned by a service provider such as a car rental company. Hence, the vehicle may be part of a fleet of vehicles. An infleeted vehicle is typically used by a number of different users. The service provider may enable the different users to use the infleeted vehicle by selectively sharing the digital key for the vehicle with the portable devices of the different users. The key sharing may be performed by a so-called server based owner device (SBOD) or a so-called server based friend device (SBFD).

The present document is directed at enabling a secure key sharing process for sharing a digital key from a server to a digital key entity, such as a smart device or a key card. The technical problem is solved by each one of the independent claims. Preferred examples are specified in the dependent claims.

According to an aspect, a key management server configured to manage a digital key for providing a digital key-based service for a vehicle (e.g., for a car, a bus, a truck or a motorcycle) is described. The key management server is configured to receive a key generation request for generating a digital key. Furthermore, the key management server is configured to generate the digital key and metadata for the digital key, to cause the metadata to be signed using an issuer key, thereby providing an issuer signature, and to cause a key tracking receipt to be signed using a tracking key, thereby providing a tracking signature. In addition, the key management server is configured to provide a key attestation of the digital key to the vehicle, wherein the key attestation is indicative of the digital key, of the metadata, of the issuer signature and of the tracking signature.

Furthermore, a method for managing a digital key which is adapted for providing a digital key-based service for a vehicle is described. The method comprises receiving, from a service server of the service provider of the digital key-based service, a key generation request for generating a digital key. In addition, the method comprises generating the digital key and metadata for the digital key, causing the metadata to be signed using an issuer key, thereby providing an issuer signature, and causing a key tracking receipt to be signed using a tracking key, thereby providing a tracking signature. In addition, the method comprises providing a key attestation of the digital key to the vehicle, wherein the key attestation is indicative of the digital key, of the metadata, of the issuer signature and of the tracking signature.

According to a further aspect, a software program is described. The software program may be adapted for execution on a processor and for performing the method steps of the method outlined in the present document when carried out on the processor.

According to another aspect, a storage medium is described. The storage medium may comprise a software program adapted for execution on a processor and for performing the method steps of the method outlined in the present document when carried out on the processor.

According to a further aspect, a computer program product is described. The computer program may comprise executable instructions for performing the method steps of the method outlined in the present document when executed on a computer.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Furthermore, it is noted that brackets are used within the present document to indicate optional features.

The invention is explained below in an exemplary manner with reference to the accompanying drawings, wherein
Fig. 1a shows an example system for controlling a vehicle function using a digital key device and/or for sharing a digital key;
Fig. 1b shows an example digital key device;
Fig. 2a illustrates an example scenario for generating a digital key for a digital key-based service on a (key management) server;
Fig. 2b illustrates an example scenario for sharing a digital key with a digital key entity; and
Fig. 3 a flow chart of an example method for generating a digital key for a digital key-based service.

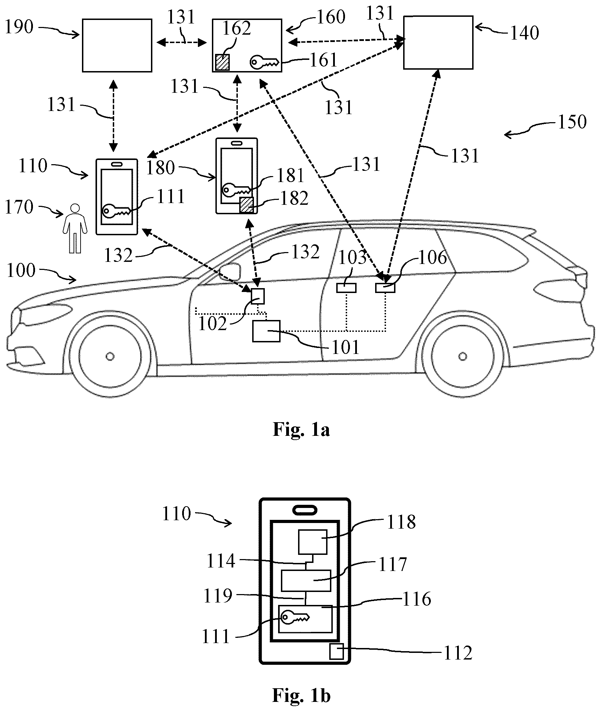

As outlined above, the present document is directed at the technical problem of generating and/or sharing a digital key for a digital key-based service for a vehicle (such as a car) in a reliable and secure manner. In this context, Fig. 1a shows an example system 150 which comprises a vehicle 100 and at least one digital key device 110. The digital key device 110 may be a portable electronic device, such as a smartphone, a tablet PC, a wearable smart device (such as a smart watch), etc., wherein a digital key 111 is stored on the portable electronic device, notably on a protected memory section (e.g., a secure element) of the portable electronic device. The device 110 typically comprises an integrated power supply, such as a battery, in order to allow the device 110 to be operated in an autonomous manner.

The digital key device 110 may communicate with a communication unit 102, 105 of the vehicle 100 via one or more different wireless communication links 132, 135. Different communication links 132, 135 may be used for different purposes. In particular, a Bluetooth Low Energy (BLE) communication link 132 may be used to
- determine the distance and/or the relative position between the digital key device 110 and the vehicle 100 (notably based on the signal strength, in particular the RSSI (Received Signal Strength Indicator), of the radio signals which are exchanged between the vehicle 100 and the device 110, and/or based on a channel sounding technique); and/or
- exchange data between the digital key device 110 (e.g., a control command for controlling a vehicle function, such as unlocking a door and/or opening or closing a window and/or activating or deactivating a heating function).

Alternatively, or in addition, a Ultrawideband (UWB) communication link may be used to determine the location of the device 110 relative to the vehicle 100 in a relatively precise manner. The determination of the location of the device 110 using the UWB communication link may be referred to as UWB ranging.

Alternatively, or in addition, a Near Field Communication (NFC) communication link 135 may be used to provide a short-range communication between the device 110 and the vehicle 100. For establishing the NFC communication link 135, the device 110 may be held in close proximity (e.g., in a distance of less than 10cm) from the communication unit 105 of the vehicle 100.

A control unit 101 of the vehicle 100 may be configured to control at least one vehicle function 103 of the vehicle 100 in dependence of the communication between the device 110 and the vehicle 100. In this context, the digital key 111 of the device 110 may be verified, in particular authenticated. Furthermore, subjected to authentication, one or more vehicle functions 103 may be controlled, notably in dependence of
- the distance between the device 110 and the vehicle 100;
- the location of the device 110 relative to the vehicle 100; and/or
- a control command sent by the device 110 to the vehicle 100 via a communication link 112, 135.

In an example system 150, a BLE communication link 112 may be established between the device 110 and the vehicle 100, once the distance between the device 110 and the vehicle 100 is equal to or less than a certain distance threshold. Once the BLE communication link 112 has been established, the device 110 may be authenticated with the vehicle 100 using the digital key 111 of the device 110. Subject to authentication of the device 110, the device 110 may be enabled to send one or more control commands via the communication link 112 for controlling one or more vehicle functions 103.

The system 150 may comprise a vehicle-server 140 which may e.g. be managed by a manufacturer of the vehicle 100. The device 110 and/or a communication unit 106 of the vehicle 100 may be configured to communication with the vehicle-server 140 via a (wireless) communication link 131 (e.g., a 3G, 4G, 5G or higher communication link).

Fig. 1b shows details of an electronic device 110 (i.e., the digital key device). Fig. 1b shows the secure storage area 116, in particular the so-called "secure element", in which the digital key 111 is stored. The secure storage area 116 typically comprises a digital key (DK) applet that is designed to provide one or more functions (e.g., generating a digital signature) with respect to the digital key 111.

The device 110 may comprise an operating system 117 which is configured to interact with the storage area 116, notably with the DK applet of the storage area 116, via a (secure) data interface 119. The operating system 117 may execute a software application 118, e.g., a software application 118 which is configured to interact with the vehicle-server 140. The operating system 117 may be configured to transfer data between the software application 118 and the operating system 117 via a data interface 114. Furthermore, the device 110 may comprise a communication module 115, notably an NFC communication module, for establishing an NFC communication link 135 with the vehicle 100 or with a key card 160.

The user 170 of the device 110 with the digital key 111 may enable another user and/or another electronic device to control one or more vehicle functions 103. For this purpose, the digital key device 110 may cause a shared digital key to be provided to and/or generated on another electronic device, wherein the shared digital key typically determines the scope of the one or more vehicle functions 103 that can be controlled by the other electronic device. The shared digital key is derived from the digital key 111. In particular, the shared digital key may be a subordinate key of the digital key 111 (within a given public key infrastructure, PKI).

The digital key device 110 (which may also be referred to as the sharer device) may send a transfer request to the vehicle server 140 and/or to the other device via the communication link 131, in order to initiate the creation of a shared digital key on the other device. The transfer request may be signed with the digital key 111 of the digital key device 110. Furthermore, the transfer request may specify a set of one or more vehicle functions 103 that can be controlled by the digital key (i.e., the entitlements of the shared digital key).

Hence, the digital key device 110 may provide information (e.g., the entitlement) which is used for creating a shared digital key for, notably on, the other device (which may be referred to as the receiver device). The receiver device may create the shared digital key (which comprises a key pair with a private key and a public key). The public key (PK) of the shared digital key (along with information such as the entitlements) may be sent to the digital key device 110. The digital key device 110 may sign the PK of the shared digital key (along with the information regarding the shared digital key), e.g., using the private key of the digital key 111. This data forms a first part of the attestation of the shared digital key.

The first part of the attestation may be sent to the vehicle server 140. The vehicle server 140 may verify the first part of the attestation (using the PK of the digital key 111) and may optionally create an immobilizer token (which is typically needed for an engine start of the vehicle 100). Furthermore, the vehicle server 140 may sign a data package comprising the first part of the attestation and/or data added by the vehicle server 140 (using the private key of the central digital key of the vehicle server 140), thereby generating the attestation for the shared digital key. This attestation may be sent to and/or compiled by the receiver device (i.e., the other electronic device). Alternatively, or in addition, the attestation may be sent (by the vehicle server 140) to the vehicle 100.

The attestation may be used by the vehicle 100 to check the authenticity of the shared digital key of the other electronic device. For this purpose, the vehicle 100 uses the digital key 111, notably the public key of the digital key 111, of the digital key device 110, from which the sharing process for creating the shared digital key was initiated. The digital key 111, notably the PK of the digital key 111, of the device 110 may be used to determine the one or more properties of the shared digital key (such as the entitlements of the shared digital key).

Furthermore, the central digital key, notably the public key (PK) of the central digital key, of the vehicle server 140 may be used to verify the authenticity of the attestation of the shared digital key of the other electronic device. The central digital key may have been used to sign meta information regarding the shared digital key (such as the receipt of the KTS (key tracking server)).

Typically, the shared digital key (along with other metadata) is comprised within the attestation, such that only the attestation is provided to the vehicle 100 and/or to the other electronic device (within respective messages). From this attestation, the shared digital key can be extracted. As indicated above, the integrity of the attestation may be verified using the (public key of) the central digital key of the vehicle server 140 and/or the (public key of the) digital key 111 from which the shared digital key was derived.

As an alternative to an owner device 110, a digital key 111 may be owned by a server, e.g., a server for managing a fleet of vehicles, as may be used by a car rental company. A server 160 that owns a digital key 111 to a vehicle 100 may be referred to as a SBOD (Server Based Owner Device). A SBOD is typically the root element of the sharing tree (i.e., of the key hierarchy) of a digital key 161. When a vehicle 100 is infleeted into a fleet of vehicles, a SBOD may be provided that a service provider (for providing a rental or a fleet service) can interact with to request one or more key sharings (for one or more different electronic devices 180).

Alternatively, or in addition, a sharer device 110 may share a digital key 111 with a service server 160, wherein a service server 160 with a shared digital key 161 may be referred to as an SBFD (Server Based Friend Device). An SBFD may be provided by directly or indirectly sharing a digital key 161 with the owner (a natural person or a server) of the digital key 111. In the context of the sharing process, an attestation 162 of the digital key 161 may be generated (and stored on the service server 160 acting as a SBFD). The SBFD may be linked with a service provider, wherein the service provider may interact with the SBFD to trigger a key sharing (based on the digital key 161), e.g., in order to provide a shared digital key 181 to an electronic device 180 of a customer of the service provider (e.g. in case of a car sharing service) or to an electronic device 180 of an employee of the service provider (e.g. in case of a maintenance service). Within the key sharing process a key attestation 182 of the shared digital key 181 may be generated.

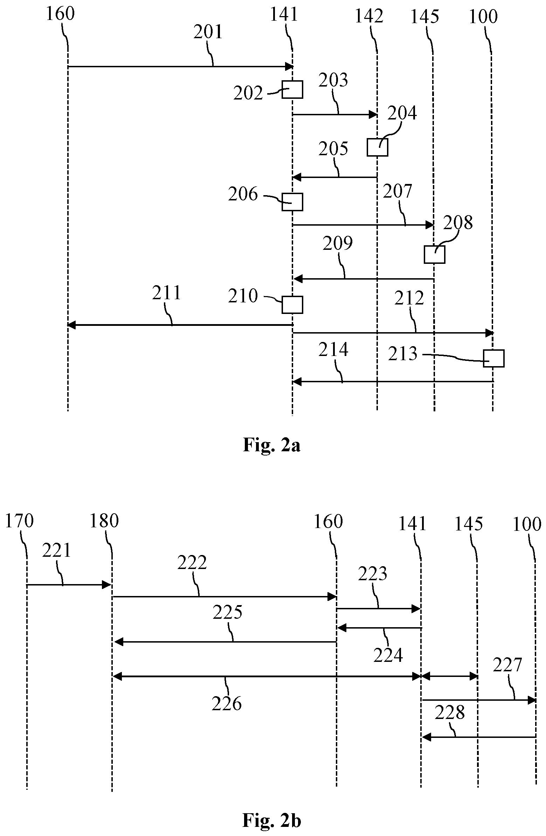

Fig. 2a shows an example process for enabling a service server 160 (e.g., a fleet management server) to provide a digital key-based service for a vehicle 100. In particular, Fig. 2a shows a process for generating a digital key 161 on key management server 141, wherein the digital key 161 may subsequently be used for one or more key sharing operations, in order to provide the digital key-based service.

The service server 160 may request generation of a digital key 161 by sending a request to the digital key management server 141 (which may e.g., be part of the vehicle server 140). The request may comprise a proof of ownership of the vehicle 100 for which the digital key 161 is requested. The proof of ownership may e.g. be provided by a code that only the owner of the vehicle 100 has access to. Alternatively, or in addition, the proof of ownership may be provided using data with regards to a key fob of the vehicle 100.

Upon receiving the request, the key management server 141 may generate (in step 202) a digital key 161 along with the first part of the key attestation 162 (as outlined above). The digital key 161 may comprise a key pair with a private key (SK) and a public key (PK). The first part of the attestation 162 may comprise metadata that is indicative of an identifier of the digital key 161 and/or of the entitlement of the digital key 161 and/or of the proof of ownership. The digital key 161 may be an ECC (elliptic-curve cryptography) key.

The key management server 141 may send the first part of the attestation 162 (notably the metadata) to a server-based issuer 142 (which may be part of the vehicle server 140), in order to request signing of the attestation 162, notably of the first part of the attestation 162 (step 203). The server-based issuer 142 (which is also referred to as the issuer server) may have an issuer key (with a SK and a PK). Furthermore, the server-based issuer 142 may be configured to sign the first part of the attestation 162 (notably the metadata with the proof of ownership and/or the entitlement) using the issuer key, notably using the SK of the issuer key (step 204). Prior to signing, the first part of the attestation 162 (notably the proof of ownership and/or the entitlement) may be verified.

The issuer signature (of the first part of the attestation 162) may be sent from the server-based issuer 142 to the key management server 141 (step 205). The key management server 141 may then append the issuer signature to the attestation 162 of the digital key 161 (step 206).

Subsequently, the key management server 141 may request the key tracking server 145 (which may be part of the vehicle server 140) to track the generated digital key 161 (step 207). The key tracking server (KTS) 145 may be configured to verify the issuer signature of the server-based issuer 142 (using the PK of the issuer key). Furthermore, the (first part of the) attestation 162 of the generated digital key 161 may be verified. In addition, the certificate chain of the generated digital key 161 may be verified. Furthermore, the generated digital key 161 may be included into the key database of the key tracking server 145, in order to enable tracking of the digital key 161. One of more of these actions may be performed within step 208.

Once the digital key 161 has been added to the key tracking database, a key tracking receipt may be sent from the key tracking server 209 to the key management server 141. The key tracking receipt may be signed by (the SK of) the central key of the key tracking server 145 (wherein the central key may also be referred to as the tracking key).

The (signed) key tracking receipt may be appended (as a second part) to the attestation 162 of the generated digital key 161 by the key management server 141 (step 210). Furthermore, it may be indicated within a vehicle database of the key tracking server 141 that the vehicle 100 has been successfully infleeted and that a server based (owner or friend) device has been generated, wherein the server based device holds a digital key 161 for controlling one or more functions 103 of the vehicle 100.

The key management server 141 may be configured to send the (completed) attestation 162 of the digital key 161 and/or information regarding the fleet configuration of the vehicle 100 to the vehicle 100 (step 212), thereby enabling the vehicle 100 to verify the digital key 161 when receiving a request for controlling a vehicle function 103 of the vehicle 100. Furthermore, the key management server 141 may be configured to inform the service server 160 about the status of the infleeting of the vehicle 100 (step 211).

The vehicle 100 may be configured to apply the fleet configuration to the vehicle 100. Furthermore, the key attestation 162 may be verified (using the PK of the issuer key and/or of the tracking key) (step 213). If the verification is successful, the digital key 161 and/or the key attestation 162 may be stored in a secure storage area of the vehicle 100 in a persistent manner. Furthermore, the vehicle 100 may inform the key management server 141 about the fact that the digital key 161 and/or the key attestation 162 have been stored successfully (step 214).

As a result of the process shown in Fig. 2a, the key management server 141 is enabled to act as a server based (owner or friend) device, which is configured to share the digital key 161 with one or more (portable) devices 180, in order to provide a digital key-based service for the vehicle 100.

Fig. 2b illustrates an example process for sharing the digital key 161 with a (portable) device 180. The process may be performed subsequent to a successful infleeting of the vehicle 100. A user 170 of the device 180 may interact with a software application 118 of the device 180 (step 221) to start the process for enabling the device 180 for a digital key-based service. This may involve generating a shared digital key 181 on the device 180, notably on the secure element of the device 180. In reaction to a user input on the device 180, an activation request for activating the digital key-based service may be sent from the device 180 to the service server 160 (step 222). The service server 160 may be a server of the service provider (e.g., the car rental company or a fleet management company). The service server 160 may verify the activation request. In particular, it may be verified whether or not the device 180 is entitled to use the requested digital key-based service.

Subsequent to the successful verification of the activation request, a key sharing request may be sent from the service server 160 to the key management server 141 (step 223) which holds the digital key 161 that is to be shared, wherein the key management server 141 acts as a server based (owner or friend) device. The key management server 141 may verify the request and if the verification is successful, the key management server 141 may prepare the sharing process for sharing the digital key 161. In this context a sharing URL (Uniform Resource Locator) on a relay server may be determined. The relay server may be used as an intermediate entity for enabling the device 180 to create the shared digital key 181 (which is derived as a subordinate key from the digital key 161). The relay server may be configured to create the sharing URL, wherein the sharing URL may point to a mailbox that was created for the key sharing process. The sharing URL may be provided to the service server 160 (step 224), in order to enable the service server 160 to provide the sharing URL to the device (step 225).

The device 180 may then invoke the sharing URL, thereby causing the shared digital key 181 to be generated on the device 180 (in accordance with the CCC standard) (step 226).

Subsequent to the generation of the shared digital key 181 on the device 180, the attestation 182 of the shared digital key 181 may be provided to the vehicle 100 (by the key management server 141) (step 227). The attestation 182 may comprise an issuer signature of the issuer server 142 and/or a tracking signature of the key tracking server 145. Furthermore, the vehicle 100 may confirm the successful storage of the shared digital key 181 and/or of the key attestation 182 on the vehicle 100 (step 228).

Hence, a process is described for creating a SBOD (i.e., a key management server 141), wherein the SBOD holds a (vehicle-specific) digital key 161, notably with a key slot identifier, a public key, and one or more other key-related properties. The SBOD key information can be synchronized into the vehicle 100. When performing key sharing of the digital key 161, the key sharing makes use of two different signatures, an issuer signature by the issuer server 142 (which may be signed using the private key of the SBOD and/or of the issuer server 142), and a tracking signature (signed by the tracking server 145).

The principle can also be used for an SBFD. In this case, the private key of the SBFD may be used for signing during a sharing process.

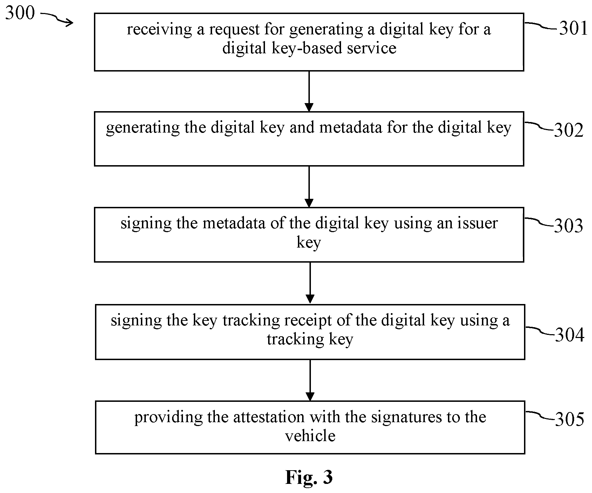

Fig. 3 shows a flow chart of an example method 300 for managing a digital key 161 which is adapted for providing a digital key-based service for a vehicle 100. The method 300 may be executed by a key management server 141. The method 300 may be directed at infleeting the vehicle 100, in order to enable the key management server 141 to provide the digital key-based service (e.g., a car rental service). Furthermore, the method 300 may be directed at causing the key management server 141 to act as a server based (owner or friend) device for the vehicle 100.

The method 300 comprises receiving 301, from a service server 160 of the service provider of the digital key-based service, a key generation request for generating a digital key 161 (which may subsequently be used to provide the digital key-based service, e.g. the car rental service). The key generation request may comprise a proof of ownership, which proofs that the service provider is the owner of the vehicle 100.

Furthermore, the method 300 comprises (subsequent to receiving 301 the key generation request) generating 302 the digital key 161 and metadata for the digital key 161. The metadata may comprise the proof of ownership and/or an entitlement that is indicative of the one or more vehicle functions 103 that can be controlled using the digital key 161.

The method 300 further comprises causing 303 the metadata to be signed using an issuer key, thereby providing an issuer signature. In particular, a signing request comprising the metadata may be sent to the issuer server 142. The issuer server 142 may be configured to verify the proof of ownership and/or the entitlement. If the verification is successful, the issuer server 142 may sign the metadata using the (private key of the) issuer key to generate the issuer signature, which may then be sent to the key management server 141.

In addition, the method 300 may comprise causing 304 the key tracking receipt for the digital key 161 to be signed using a tracking key, thereby providing a tracking signature. The key tracking receipt may be indicative of the fact that the digital key 161 is tracked by the key tracking server 145. In particular, a tracking request may be sent to the key tracking server 145. The key tracking server 145 may verify the certificate, notably the certificate chain, of the digital key 161. If the verification is successful, the key tracking server 145 may include the digital key 161 into a tracking database. Furthermore, the key tracking server 145 may issue a key tracking receipt for the digital key 161, and may sign the key tracking receipt using the (private key of the) tracking key of the key tracking server 145 to generate the tracking signature, which may then be sent to the key management server 141.

The method 300 further comprises providing 305 the key attestation 162 of the digital key 161 to the vehicle 100, wherein the key attestation 162 is indicative of the digital key 161, of the metadata, of the issuer signature and of the tracking signature. Furthermore, the service server 160 may be informed that the generation of the digital key 161 has been successful. The digital key 161 may then be used to provide the digital key-based service. In the context of the provision of the digital key-based service, one or more shared digital keys 181 may be derived from the digital key 161.

By making use of an issuer server 142 for verifying the metadata of the digital key 161, notably for verifying the proof of ownership and/or the entitlement, a server based (owner or friend) device for a digital key-based service may be established in a particularly reliable and secure manner.

Hence, a key management server 141 is described, which is configured to manage a digital key 161 for providing a digital key-based service for a vehicle 100. The key management server 141 may be a server based (owner or friend) device (notably an SBOD or a SBFD according to the CCC standard). The digital key 161 may be a digital key according to the Car Connectivity Consortium, CCC, Standard release 3, release 4 or higher.

The key management server 141 is configured to receive a key generation request for generating a digital key 161. The key generating request may have been sent by a service server 160 of the service provider of the digital key-based service to the key management server 141. The key generation request may comprise a proof of ownership, which indicates that the service provider is the owner of the vehicle 100. The key generation request may be received via a communication link 131 between the service server 160 and the key management server 141.

The service server 160 may be configured to provide a user interface for the digital key-based service. One or more (portable) devices 180 may interact with the service server 160 (e.g., using a software application 118 for the digital key-based service), in order to make use of the digital key-based service (e.g., in order to receive access to the vehicle 100).

The key management server 141 is further configured to (subject to receiving the key generation request) generate the digital key 161 and metadata for the digital key 161. The metadata may comprise the proof of ownership. Alternatively, or in addition, the key management server 141 may be configured to generate metadata which is indicative of an entitlement of the digital key 161, wherein the entitlement may be indicative of one or more functions 103 of the vehicle 100 that can be controlled using the digital key 161.

In addition, the key management server 141 is configured to cause the metadata to be signed using an issuer key, thereby providing an issuer signature. In particular, the key management server 141 may be configured to send a signing request for signing the metadata for the digital key 161 to the issuer server 142, and, in reaction to sending the signing request, to receive the issuer signature from the issuer server 142. The issuer signature may be generated by signing the metadata using a private key of the issuer key of the issuer server 142. The issuer server 142 may be configured to generate the issuer signature (only) subject to a successful verification of the metadata.

In particular, the key management server 141 may be configured to cause the issuer server 142 to verify whether or not the proof of ownership and/or the entitlement is valid. Furthermore, the key management server 141 may be configured to receive the issuer signature from the issuer server, wherein receipt of the issuer signature may be indicative of the fact that the issuer server 142 has found the proof of ownership and/or the entitlement to be valid.

Hence, the key management server 141 may make use of a dedicated issuer server 142 for verifying the proof of ownership and/or the entitlement. The successful verification may be confirmed using an issuer signature (based on the issuer key of the issuer server 142). As a result of this, a server based (owner or friend) device may be established in a particularly reliable and secure manner.

The key management server 141 is further configured to cause the key tracking receipt for the digital key 161 to be signed using a tracking key, thereby providing a tracking signature. The key tracking receipt may be indicative of the fact that the digital key 161 is tracked by a key tracking server 145. The tracking signature may be generated by signing the key tracking receipt using the private key of the tracking key of the key tracking server 145.

In particular, the key management server 141 may be configured to send a tracking request for tracking of the digital key 161 to the key tracking server 145. The key tracking request may be sent via a communication link 135 between the key management server 141 and the key tracking server 145. The tracking signature may be received from the key tracking server 145 in reaction to sending the tracking request.

Furthermore, the key tracking server 141 may be configured to provide the key attestation 162 of the digital key 161 to the vehicle 100. The key attestation 162 may be indicative of the digital key 161, of the metadata, of the issuer signature and of the tracking signature. As a result of this, the digital key 161 is enabled for controlling one or more vehicle functions 103 of the vehicle 100 (within the scope defined by the entitlement of the digital key 161).

The key management server 141 may be configured to receive, from the service server 160, a sharing request for sharing the digital key 161. The sharing request may be received in the context of the provision of the digital key-based server, e.g., in order to enable a (portable) device 180 to control one or more vehicle functions 103 of the vehicle 100.

Furthermore, the key management server 141 may be configured to, in reaction to receiving the sharing request, send a sharing URL for a shared digital key 181, which is a subordinate key to the digital key 161, to the service server 160. The sharing URL may point to a mailbox of a relay server, which comprises data for generating the shared digital key 181. The service server 160 may forward the sharing URL to a (portable) device 180 which may then generate the shared digital key 181 on a storage area 116 of the device 180 using the sharing URL.

In addition, the key management server 141 may be configured to send the key attestation 182 for the shared digital key 181 to the vehicle 100, thereby enabling one or more vehicle functions 103 to be controlled using the shared digital key 181.

The key attestation 182 for the shared digital key 181 may comprise an issuer signature of the metadata of the shared digital key 181. The issuer signature may have been generated using the (private key of the) issuer key. Furthermore, the key attestation 182 for the shared digital key 181 may comprise a tracking signature of the key tracking receipt for the shared digital key 181. The tracking signature may have been generated using (the private key of) the tracking key of the key tracking server 145.

Hence, a particularly secure and reliable key sharing for a digital key-based service may be achieved by a service based (owner or friend) device.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A key management server (141) configured to manage a digital key (161) for providing a digital key-based service for a vehicle (100); wherein the key management server (141) is configured to
- receive a key generation request for generating a digital key (161), from a service server (160) of the service provider of the digital key-based service;
- generate the digital key (161) and metadata for the digital key (161);
- cause the metadata to be signed using an issuer key, thereby providing an issuer signature;
- cause a key tracking receipt to be signed using a tracking key, thereby providing a tracking signature; wherein the key tracking receipt is indicative of the fact that the digital key (161) is tracked by a key tracking server (145); and
- provide a key attestation (162) of the digital key (161) to the vehicle (100); wherein the key attestation (162) is indicative of the digital key (161), of the metadata, of the issuer signature and of the tracking signature.

2. The key management server (141) of claim 1, wherein
- the key generation request and/or the metadata comprises a proof of ownership, which indicates that the service provider is owner of the vehicle (100); and
- the key management server (141) is configured to
- cause an issuer server (142) to verify whether or not the proof of ownership is valid; and
- receive the issuer signature from the issuer server; wherein receipt of the issuer signature is indicative of the fact that the issuer server (142) has found the proof of ownership to be valid.

3. The key management server (141) of any previous claim, wherein
- the key management server (141) is configured to generate metadata which is indicative of an entitlement of the digital key (161); and
- the entitlement is indicative of one or more functions (103) of the vehicle (100) that can be controlled using the digital key (161).

4. The key management server (141) of any previous claim, wherein
- the issuer signature is generated by signing the metadata using a private key of the issuer key of an issuer server (142); and/or
- the tracking signature is generated by signing the key tracking receipt using a private key of the tracking key of the key tracking server (145).

5. The key management server (141) of any previous claim, wherein the key management server (141) is configured to
- send a signing request for signing the metadata for the digital key (161) to an issuer server (142); and
- in reaction to sending the signing request, receive the issuer signature from the issuer server (142).

6. The key management server (141) of any previous claim, wherein the key management server (141) is configured to
- send a tracking request for tracking of the digital key (161) to the key tracking server (145); and
- in reaction to sending the tracking request, receive the tracking signature from the key tracking server (145).

7. The key management server (141) of any previous claim, wherein the digital key (161) is a digital key according to the Car Connectivity Consortium, CCC, Standard release 3, release 4 or higher.

8. The key management server (141) of any previous claim, wherein the key management server (141) is configured to
- receive, from the service server (160), a sharing request for sharing the digital key (161);
- in reaction to receiving the sharing request, send a sharing URL for a shared digital key (181), which is a subordinate key to the digital key (161), to the service server (160); wherein the sharing URL points to a mailbox of a relay server, which comprises data for generating the shared digital key (181).

9. The key management server (141) of claim 8, wherein
- the key management server (141) is configured to send a key attestation (182) for the shared digital key (181) to the vehicle (100); and
- the key attestation (182) for the shared digital key (181) comprises an issuer signature of metadata of the shared digital key (181) and a tracking signature of a key tracking receipt for the shared digital key (181).

10. A method (300) for managing a digital key (161) which is adapted for providing a digital key-based service for a vehicle (100); wherein the method (300) comprises,
- receiving (301), from a service server (160) of the service provider of the digital key-based service, a key generation request for generating a digital key (161);
- generating (302) the digital key (161) and metadata for the digital key (161);
- causing (303) the metadata to be signed using an issuer key, thereby providing an issuer signature;
- causing (304) a key tracking receipt to be signed using a tracking key, thereby providing a tracking signature; wherein the key tracking receipt is indicative of the fact that the digital key (161) is tracked by a key tracking server (145); and
- providing (305) a key attestation (162) of the digital key (161) to the vehicle (100); wherein the key attestation (162) is indicative of the digital key (161), of the metadata, of the issuer signature and of the tracking signature.
